Europäisches Patentamt

European Patent Office

Office européen des brevets

(19)

(11) **EP 1 291 858 A1**

(12) **EUROPEAN PATENT APPLICATION**
published in accordance with Art. 158(3) EPC

(43) Date of publication:
**12.03.2003 Bulletin 2003/11**

(51) Int Cl.⁷: **G11B 7/24**, C08F 8/04

(21) Application number: **01923977.1**

(22) Date of filing: **24.04.2001**

(86) International application number:
**PCT/JP01/03523**

(87) International publication number:
**WO 01/082298 (01.11.2001 Gazette 2001/44)**

(84) Designated Contracting States:
**AT BE CH CY DE DK ES FI FR GB GR IE IT LI LU
MC NL PT SE TR**
Designated Extension States:
**AL LT LV MK RO SI**

(30) Priority: **26.04.2000 JP 2000125551
05.06.2000 JP 2000167159
10.07.2000 JP 2000207890**

(71) Applicants:
• **TEIJIN LIMITED**
 **Osaka-shi Osaka 541-0054 (JP)**
• **BAYER AG**
 **51368 Leverkusen (DE)**

(72) Inventors:
• **KIDO, Nobuaki c/o Teijin Limited**
 **Iwakuni-shi, Yamaguchi 740 -0014 (JP)**
• **MATSUMURA, Shunichi c/o Teijin Limited**
 **Iwakuni-shi, Yamaguchi 740-0014 (JP)**

• **IWATA, Kaoru**
 **Hachioji-shi Tokyo 192-0914 (JP)**
• **NITTA, Hideaki c/o Teijin Limited**
 **Iwakuni-shi Yamaguchi 740-0014 (JP)**
• **SUZUKI, Kazutomi c/o Teijin Limited**
 **Mihara-shi Hiroshima 723-0015 (JP)**
• **TOMIE, Takashi C/o Teijin Limited**
 **Mihara-shi, Hiroshima 723-0015 (JP)**
• **HASHIDZUME, Kiyonari c/o Teijin Limited**
 **Iwakuni-shi Yamaguchi 740-0014 (JP)**
• **TAKEUCHI, Masaki c/o Teijin Limited**
 **Iwakuni-shi Yamaguchi 740-0014 (JP)**
• **KOHNO, Kazuteru c/o Teijin Limited**
 **Iwakuni-shi Yamaguchi 740-0014 (JP)**

(74) Representative: **Hallybone, Huw George et al
Carpmaels and Ransford,
43 Bloomsbury Square
London WC1A 2RA (GB)**

(54) **OPTICAL RECORDING MEDIUM AND SUBSTRATE FOR USE THEREIN**

(57)    An optical recording medium for recording and reproducing information by making use of a change in the physical properties of a recording layer caused by exposure to light. A substrate for the optical recording medium is made from a hydrogenated styrene polymer having a nuclear hydrogenated styrene polymer unit content of 80 wt% or more and has a glass transition temperature of 110°C or more, a light transmission at 400 nm of 88 % or more, and a retardation absolute value at 0° and 30° from a direction normal to the substrate plane of 30 nm or less. This optical recording medium is suitable for high-density optical recording which makes it possible to increase the numerical aperture and reduce the wavelength of an optical head.

EP 1 291 858 A1

**Description**

Field of the Invention

The present invention relates to an optical recording medium for recording and reproducing information by making use of a change in the physical properties of a recording layer caused by exposure to light and relates to a substrate thereof. More specifically, it relates to a high-density optical recording medium which can be used with an optical head having a large numerical aperture and a short wavelength and relates to a substrate thereof.

Related Art

Optical recording media which are generally marketed as a magneto-optical recording medium or phase changing recording medium are a substrate incident type optical disk in which a recording layer is irradiated with laser light through a transparent substrate. The magneto-optical recording medium enables information to be recorded or erased by increasing the temperature of a recording layer by exposure to light, especially laser light, to reduce the coercive force of the recording layer and reverse the magnetization direction by an external magnetic field. The temperature of the recording layer is increased to about 200°C. The phase changing recording medium makes use of a reversible structural change, that is, a phase change between the non-crystalline state and crystalline state of a substance caused by exposure to light, especially laser light, to record and erase information. The temperature of the recording layer becomes about 600°C at the time of recording and about 170°C at the time of erasure. The phase changing recording medium has a large memory capacity in addition to high-speed information processing capacity. Since a drive unit for the phase changing recording medium is simpler in structure than a drive unit for the magneto-optical recording medium, it can be produced at a low cost.

Typical structures of the magneto-optical recording medium and the phase changing recording medium are a laminate consisting of a transparent polycarbonate (PC) disk and inorganic thin films formed by deposition or sputtering. Ordinary media currently available on the market have a laminate structure consisting of a PC substrate, first dielectric layer, recording layer, second dielectric layer, reflective layer and organic resin protective layer.

The recording layer of the magneto-optical recording medium is made from a rare earth-transition metal alloy such as TbFeCo and the recording layer of the phase changing recording medium is made from a chalcogen alloy such as GeSbTe or AgInSbTe. A nitride film such as SiN is used as the dielectric of the magneto-optical recording medium and a ZnS-based thin film such as an $ZnS \cdot SiO_2$ film is used as the dielectric of the phase changing recording medium. Generally speaking, an information erased state is the crystalline state of the recording layer and an information recorded state is a non-crystalline state formed by the melting and quenching of the thin film with high laser power in the phase changing recording medium. The recording layer of the phase changing recording medium is in a non-crystalline state right after the formation of the thin film by sputtering and is changed to a crystalline state, that is, an erased state by overall annealing before use. The overall annealing is carried out by irradiating a laser beam having a width of 1 to 2 μm and a length of about 100 μm at about 1 watt. This step is called for "initialization (initial crystallization)".

Meanwhile, polycarbonate resins and polymethyl methacrylate resins have been used as the material of a substrate for optical disks because they are excellent as an optical material. Out of these, polycarbonate resins are widely used as a disk material as they have excellent transparency, heat stability and toughness.

However, polycarbonate resins have a large intrinsic birefringence because they have an aromatic ring in the molecule and optical anisotropy readily occurs in molded products thereof. Polymethyl methacrylates have poor dimensional stability and low heat resistance because they have an extremely high water absorption. Although polycarbonates are generally used in the current optical disk substrates, such problems as the large birefringence of the polycarbonates and the warp of a disk by moisture absorption have been apprehended along with an increase in the capacity of a magneto-optical recording disk (MOD) and an increase in recording density typified by the development of a digital versatile disk (DVD) and the development of a blue laser.

As one of raw materials for solving the above problems, JP-B7-114030 (the term "JP-B" as used herein means an "examined Japanese patent publication") which proposes a hydrogenated polystyrene-based polymer discloses an optical disk which is made from a hydrogenated polystyrene-based resin having a vinyl cyclohexane content of 80 wt% or more and a birefringence of the substrate of 50 nm or less. The resin has a high light transmission, and a much smaller birefringence and water absorption than polycarbonate resins and hence, is preferred as a raw material for optical disks.

Further, in order to improve the defects of the above resins, it has been proposed that a hydride of a styrene-conjugated diene block copolymer prepared by block copolymerizing styrene and a conjugated diene such as isoprene or butadiene and introducing a rubber component into the copolymer is used for optical application such as optical disk substrates. Japanese Patent No. 2668945 teaches conditions such as molecular weight and softening temperature for achieving heat resistance at the time of processing into an optical disk. Japanese Patent No. 2730053 discloses the copolymerization of a hydrogenated polystyrene-based resin to improve solvent resistance.

Although many proposals have been made to use the above resins in optical disk substrates, only a general description of optical disk substrates is given and there are few descriptions of the actually used optical recording media. JP-B 7-114030 does not give any examples of an optical disk, merely teaches the characteristic properties of a substrate in Examples and has no description of the priority of optical disk forms. JP-A 10-116442 (the term "JP-A" as used herein means an "unexamined published Japanese patent application") merely teaches that a hydrogenated polystyrene-based polymer can be effectively used as organic coating type coloring matter. Japanese Patent No. 2725402 discloses a composition which comprises a hydrogenated polystyrene-based copolymer, a hydrogenated polystyrene-based polymer different from the above copolymer and a saturated hydrocarbon-based resin and teaches that a thin film of SiNx or TaOx is formed on an optical disk substrate and a recording layer made from TbFeCo can be formed on the thin film layer, in order to improve adhesive between a recording layer and a substrate.

Requirements for recording media for writing and reading information are becoming higher and higher as the recording density increases. Laser light used to write and read information has a short wavelength and an object lens having a larger numerical aperture is needed. Therefore, not only the birefringence on the plane of the above substrate but also the birefringence in a direction perpendicular to the plane have a great influence upon the writing and reading of information, whereby it is becoming more and more difficult to increase the recording density of an optical recording medium.

It is therefore an object of the present invention to provide a high-density optical recording medium which can be used with an optical head having a large numerical aperture and a short wavelength.

It is another object of the present invention to provide a substrate advantageously used in the above optical recording medium of the present invention.

Other objects and advantages of the present invention will become apparent from the following description.

According to the present invention, firstly, the above objects and advantages of the present invention are attained by an optical recording medium for recording and reproducing information by making use of a change in the physical properties of a recording layer caused by exposure to light, comprising a substrate which comprises (1) a hydrogenated styrene polymer having a nuclear hydrogenated styrene polymer unit content of 80 wt% or more and which has (2) a glass transition temperature of 110°C or more, (3) a light transmission at 400 nm of 88 % or more, and (4) a retardation absolute value at 0° and 30° from a direction normal to the substrate plane of 30 nm or less.

Secondly, the above objects and advantages of the present invention are attained by a substrate for optical recording media, which comprises (1) a hydrogenated styrene polymer having a nuclear hydrogenated styrene polymer unit content of 80 wt% or more and which has (2) a glass transition temperature of 110°C or more, (3) a light transmission at 400 nm of 88 % or more, and (4) a retardation absolute value at 0° and 30° from a direction normal to the substrate plane of 30 nm or less.

The Preferred Embodiments of the Invention

The hydrogenated styrene polymer used in the present invention has a nuclear hydrogenated styrene polymer unit content of 80 wt% or more. The styrene polymer used for hydrogenation is a polymer obtained by polymerizing a styrene such as polystyrene, $\alpha$-methylstyrene, 4-methylstyrene or 2-methylstyrene, or a combination of two or more thereof. A styrene polymer comprising styrene and having a nuclear hydrogenated styrene polymer unit content of 80 wt% or more after hydrogenation is particularly preferred from the viewpoints of the physical properties and cost of a hydrogenated polymer.

Another component constituting the hydrogenated styrene polymer used in the present invention is a hydrogenated conjugated diene polymer unit such as isoprene, 1,3-butadiene, 2,3-dimethyl-1,3-butadiene, 1,3-pentadiene or 1,3-hexadiene. Out of these conjugated dienes, isoprene and 1,3-butadiene are preferred from the viewpoints of activity at the time of polymerization and economy. These conjugated dienes may be used alone or in combination of two or more. The amount of the hydrogenated conjugated diene polymer unit to be copolymerized in the hydrogenated styrene polymer is preferably 20 wt% or less, more preferably 15 wt% or less after hydrogenation.

The hydrogenation factor of the hydrogenated styrene polymer is preferably 95 mol% or more. When the hydrogenation factor is lower than 95 mol%, the heat resistance of the obtained polymer lowers and the birefringence of a molded product rises disadvantageously. The hydrogenation factor is desirably as high as possible. The hydrogenation factor is preferably 98 mol% or more, more preferably 99 mol% or more.

The hydrogenated styrene polymer may be a random copolymer or block copolymer.

The amount of the residual catalytic metal component in the resin is preferably as small as possible. The amount of the residual metal is preferably 10 ppm or less, more preferably 1 ppm or less.

The hydrogenated styrene polymer used in the present invention may be a homopolymer, copolymer or composition comprising at least two of the above components. Examples of the hydrogenated styrene polymer are (A) hydrogenated polystyrenes, (B) a hydrogenated styrene copolymers comprising a diene component, (C1) compositions comprising the components (A) and (B), and (C2) compositions comprising at least two of the above components (B).

The hydrogenated polystyrenes (A) have a reduced viscosity measured in cyclohexane at 0.5 g/dL and 30°C of preferably 0.2 to 0.7 dL/g, more preferably 0.3 to 0.6 dL/g.

The hydrogenated styrene copolymers (B) differ in characteristic properties as a polymer material according to such factors as the molecular weight of the polymer, the types and molecular structures of the comonomers, and the molecular weight of the copolymerization block. The copolymer used in the present invention has a hydrogenated diene polymer unit content of preferably 20 wt% or less, more preferably 15 wt% or less, much more preferably 10 wt% or less. The copolymer is a copolymer which is hydrogenated after a conjugated diene is copolymerized with a styrene monomer by a known method such as anion polymerization. The hydrogenated diene polymer unit preferably has a block structure. In the case of random copolymerization, the glass transition temperature of the obtained resin is low disadvantageously. Even when the hydrogenated diene polymer unit has a block structure, what has such a block structure that the boundary between a hydrogenated styrene polymer unit and a hydrogenated diene polymer unit is distinct is preferred because it has high heat resistance. Phase separation between the hydrogenated styrene polymer unit and the hydrogenated diene polymer unit occurs due to this structure, thereby making it possible to obtain a hydrogenated styrene polymer having a glass transition temperature of 110°C or more, preferably 130°C or more.

Further, the hydrogenated styrene copolymer (B) have a reduced viscosity of preferably 0.3 dL/g or more, more preferably 0.35 to 0.55 dL/g, much more preferably 0.37 to 0.52 dL/g from the viewpoint of the toughness of a molded product.

The above hydrogenated styrene polymer can have a linear structure without a branch, or a star-like branched structure consisting of a core and a branched chain extending linearly from the core.

The linear structure without a branch is preferably a structure (a-b-a structure) that a hydrogenated diene polymer unit block (b) is sandwiched between hydrogenated styrene polymer unit blocks (a) to retain transparency. In this structure, phase separation easily occurs at the wavelength of light or less. To produce a copolymer having this linear structure, conventionally known methods may be used. For example, this copolymer can be produced by carrying out living anion polymerization on the styrene polymer unit block (a), diene polymer unit block (b) and styrene polymer unit block (a) in the presence of an organic lithium initiator in the mentioned order and terminating the reaction with an alcohol. Although the amount of a conjugated diene component is as large as possible to improve mechanical properties such as impact resistance, if it is too large, agglomeration and crystallization readily occur with the result of reduced transparency and heat resistance.

The expression "copolymer having a star-like branched structure consisting of a core and a branched chain extending linearly from the core" means that one terminals of at least three linear polymers are bonded to one another at the core site. The number of branched chains extending from the core, which differs according to the type of the core, is at least three, preferably four from the viewpoints of synthesis and physical properties. When a more functional core is used, a star-like polymer having more branches can be obtained. There is a case where one branch component having a lowmolecular weight is inevitably formed by synthesis and a small amount of one branch component may be contained.

The branches of the copolymer having a star-like branched structure consist of polymer structure obtained by hydrogenating the double bond and aromatic ring of a block copolymer of a styrene polymer unit and a conjugated diene polymer unit. The structure of the copolymer is preferably a star-like structure that a hydrogenated styrene polymer unit is external to the core because a molded product of the copolymer having this structure has high mechanical strength.

A combination of the above components (A) and (B) is a mixture (C1) of a hydrogenated polystyrene having no conjugated diene component and a hydrogenated copolymer (B), or a mixture (C2) of two or more hydrogenated copolymers (B). Out of these mixtures (C1) and (C2), (C1) is more advantageous in terms of cost and production because it comprises a hydrogenated polystyrene.

Preferably, the mixtures (C1) and (C2) have a nuclear hydrogenated styrene polymer unit content of 80 wt% or more on the basis of whole composition, a glass transition temperature of 110°C or more and a hydrogenation factor of 95 % or more. When the hydrogenation factor is lower than 95 mol%, there readily arise such problems as reductions in the transparency and heat resistance of the obtained hydrogenated polymer and an increase in the birefringence of a molded product thereof disadvantageously. As understood from the above general description, the hydrogenation factor is desirably as high as possible. However, it is actually determined in consideration of the physical properties of the obtained hydrogenated copolymer and the economy including equipment and operation costs of the hydrogenation step required to achieve the nuclear hydrogenation factor. It is preferably 98 mol% or more, more preferably 99 mol% or more.

A hydrogenated polymer composition having a reduced viscosity of 0.3 dL/g or more is preferred from the viewpoint of the toughness of a molded product thereof. The reduced viscosity is preferably 0.35 to 0.55 dL/g, more preferably 0.37 to 0.52 dL/g.

Out of the hydrogenated styrene polymers in the present invention, (i) a hydrogenated styrene polymer having a nuclear hydrogenated styrene polymer unit content of 80 to 99.99 wt%, the maximum value of tan$\delta$ at an angular frequency $\omega$ (rad/s) in range of 0.1 to 100 (rad/s) in the measurement of viscoelasticity at 280°C and an elasticity term G' ($\omega_0$) of $10^3$ Pa or less at an angular frequency $\omega_0$ (rad/s) at which tan$\delta$ becomes maximum is excellent in that it gives an optical recording medium substrate having excellent replication and no warp after molding, and (ii) a hydrogenated styrene polymer having a nuclear hydrogenated styrene polymer unit content of 80 to 99 wt% and a temperature at which tan$\delta$ exceeds 0.04 in the measurement of viscoelasticity at 1 Hz in the range of 80 to 150° C is excellent in that it gives an optical recording medium substrate having excellent pit or land stability after molding.

Tan$\delta$ of the complex elastic modulus and the elasticity term G' ($\omega_0$) of the above hydrogenated styrene polymer (i) are obtained from a oscillation experiment using a cone plate fixture or the like. Tan$\delta$ is the ratio of loss elastic modulus G" ($\omega_0$) to storage elastic modulus G' ($\omega_0$) obtained from the oscillation experiment. That is, tan$\delta$ = G"($\omega_0$)/G' ($\omega_0$). The above hydrogenated styrene polymer (i) must have the maximum value of complex elastic modulus tan$\delta$ at 280°C. It is considered that this maximum value is attributed to phase separation between the hydrogenated styrene polymer unit and the hydrogenated conjugated diene polymer unit of the hydrogenated styrene polymer.

When the elasticity term G' ($\omega_0$) is larger than $10^3$ (Pa) and stress required for the destruction of a phase separated structure is too large, it is difficult to obtain a molded product having satisfactory replication to such an extent that the molded product can be removed from a mold, even if a mold temperature is increased to obtain a satisfactory replication, and the molded product is apt to be inferior in replication at the time of molding and flatness of a disk. As the elasticity termG' ($\omega_0$) becomes smaller, amore preferred optical disk can be obtained. The elasticity term G' ($\omega_0$) is preferably 5 x $10^2$ (Pa) or less, more preferably 2 x $10^2$ (Pa) or less.

The measurement angular frequency is 0.1 to 100 (Rad/s). When the angular frequency is lower than 0.1 (Rad/s), the time range is too long and molding conditions are hardly reflected. When the angular frequency is higher than 100 (Rad/s), it is generally difficult to carry out a oscillation experiment.

The above hydrogenated styrene polymer (i) is preferably a hydrogenated copolymer (B) described above, a mixture (C1) of a hydrogenated polystyrene (A) described above and a hydrogenated copolymer (B), or a mixture (C2) of hydrogenated copolymers (B).

In the above hydrogenated styrene polymer (ii), tan$\delta$ is the ratio E"/E' of loss elastic modulus (E") to storage elasticmodulus (E') in a viscoelasticity experiment conducted by 3 points bending, and the hydrogenated styrene polymer has a temperature at which tan$\delta$ exceeds 0.04 in the measurement of viscoelasticity at 1 Hz in the range of 80 to 150°C. When the temperature at which tan$\delta$ exceeds 0.04 in the measurement of viscoelasticity at 1 Hz is 80 to 150°C, pits or grooves rarely deform at at least 80°C and environmental stability at 80°C can be achieved. When the temperature at which tan$\delta$ exceeds 0.04 is lower than 80° C, land deforms at a temperature lower than 80°C with the result of inferior stability at high temperatures. The temperature at which tan$\delta$ reaches 0.04 is preferably higher within the above temperature range.

As the above hydrogenated styrene polymer, what has a block length of the hydrogenated conjugated diene polymer block of 3,000 to 100,000 g/mol in terms of weight average molecular weight is particularly preferred out of the above hydrogenated copolymers (B). When the weight average molecular weight is lower than 3,000 g/mol, the hydrogenated conjugated diene polymer block and the hydrogenated styrene polymer block may become partially compatible with each other, thereby reducing stability at high temperatures. When the weight average molecular weight is higher than 100,000 g/mol, the scale of phase separation of the hydrogenated conjugated diene polymer block tends to become large, causing reductions in transparency and stability at high temperatures.

The substrate made from the above hydrogenated styrene polymer of the present invention has a glass transition temperature of 110°C or more, preferably 120° C or more, more preferably 130°C or more. Since the optical disk is often used in a car where it reaches high-temperature, it must pass a heat resistance test at 110° C. When the glass transition temperature is lower than 110° C, a pit or land groove format pattern is deformed by the heat of a laser at the time of recording and reproduction and/or exposure to high-power laser light at the time of the initialization (initial crystallization) of a phase changing optical recording medium disadvantageously. From this viewpoint, the glass transition temperature is preferably higher, particularly preferably 140°C or more.

The hydrogenated styrene polymer of the present invention can be produced as follows.

A styrene polymer before hydrogenation can be produced by polymerizing a styrene monomer, or a styrene monomer and a conjugated diene in the presence of an organic lithium initiator by a known method such as anion polymerization.

As described above, molecular structures are divided into a linear structure or a branched structure. To synthesize a polymer having a star-like branched structure, two methods are generally employed. One is to carry out polymerization radially from an initiator as a core, using a polyfunctional compound as a polymerization initiator.

The other is to bond a polymerizable terminal at one end of a polymer by a polyfunctional coupling agent after the polymerization of a linear polymer. The method in which the polyfunctional polymerization initiator is used has such an advantage that a star-like branched structure of interest is easily obtained but it must use an expensive initiator.

Meanwhile, the method in which coupling is carried out after polymerization has a possibility that a perfect start-like polymer may not be obtained as coupling does not proceed completely according to conditions but it can produce the polymer having a star-like branched structure at a low cost. In the present invention, either one of the methods may be used to synthesize a star-like block copolymer but the latter method is preferred from the viewpoints of synthesis ease and economy. A coupling reaction in the latter method is carried out by adding a polyfunctional compound as a coupling agent to the active terminal of a polymer after a polymerization reaction between all the monomers.

The polyfunctional compound which can react and bond with the active lithium terminal of the copolymer is exemplified by chlorosilanes such as tetrachlorosilane, trichloro(methyl)silane, bis(trichlorosilyl)methane, bis(trichlorosilyl)ethane and bis(trichlorosilyl)hexane, diester compounds such as dimethyl terephthalate, dimethyl isophthalate, dimethyl oxalate, diethyl malonate and diethyl adipate, triester compounds such as tri-2-ethylhexyl trimellitate, and acid anhydride compounds such as trimellitic anhydride and pyromellitic dianhydride.

Further, the coupling agent is more preferably an alkoxysilane compound. The alkoxysilane compound is exemplified by compounds represented by the following formulas (I) to (III).

$$Si(OR^1)_m R^2_{4-m} \qquad (I)$$

$$Si_2(OR^1)_n R^2_{3-n} \qquad (II)$$

$$R^3[Si(OR^1)_n R^2_{3-n}]_2 \qquad (III)$$

In the above formulas (I) to (III), $R^1$ and $R^2$ are the same or different and each an alkyl group having 1 to 8 carbon atoms or aryl group having 6 to 18 carbon atoms, $R^3$ is an alkylene group having 1 to 10 carbon atoms, m is 3 or 4, and n is 2 or 3.

In the alkoxysilane compounds represented by the above formulas (I) to (III), preferred examples of $R^1$ and $R^2$ are alkyl groups such as methyl, ethyl, propyl and butyl, and aryl groups such as phenyl. Preferred examples of $R^3$ are alkylene groups such as methylene, ethylene and 1,6-hexylene.

Specific examples of the compounds are alkoxysilanes such as tetramethoxysilane, tetraethoxysilane, tetraphenoxysilane, trimethoxy(methyl)silane, bis(trimethoxysilyl)ethane, bis(triethoxysilyl)ethane, bis(trimethoxysilyl)hexane and bis(triethoxysilyl)methane. Tetraalkoxysilanes such as tetramethoxysilane and tetraethoxysilane are preferred because they are inexpensive and economical and alkoxysilane compounds having a functionality of 6 such as bis(trimethoxysilyl)ethane are preferred because they readily react with a polymer to form a star-like branched structure having 4 branches easily.

The coupling reaction is generally carried out at -20 to 150° C, preferably 10 to 120° C though the temperature differs according to the type of the coupling agent used. When the reaction temperature is lower than -20°C, the coupling reaction is difficult to proceed and when the reaction temperature is higher than 150°C, the active terminal of the copolymer is readily deactivated before the coupling reaction disadvantageously.

The synthesis of polymers having a linear structure and branched structure has been described above. A hydrogenation reaction of the polymers will be described hereinbelow.

The hydrogenation reaction can be carried out in the presence of a conventionally known hydrogenation catalyst. The catalyst used for hydrogenation is not particularly limited and any known catalyst can be used if it can hydrogenate an aromatic ring and a double bond. More specifically, the catalyst is a solid catalyst comprising a metal such as nickel, palladium, platinum, cobalt, ruthenium or rhodium, or an oxide, salt or complex thereof carried on a porous carrier such as carbon, alumina, silica or silica·alumina diatomaceous earth. Out of these, a catalyst comprising nickel, palladium or platinum carried on alumina, silica or silica·alumina diatomaceous earth is preferred because it has high reactivity. The hydrogenation catalyst is preferably used in an amount of 0.5 to 40 wt% based on the styrene polymer before hydrogenation though the amount differs according to the activity of the catalyst.

The hydrogenation reaction conditions include a hydrogen pressure of 30 to 250 kgf/cm$^2$ (2.9 to 24.5 MPa) and a reaction temperature of 70 to 250°C. When the reaction temperature is too low, the reaction is difficult to proceed and when the reaction temperature is too high, the molecular weight is readily reduced by the scission of a molecular chain. To prevent a reduction in molecular weight caused by the scission of the molecular chain and carry out the reaction smoothly, the hydrogenation reaction is preferably carried out at an appropriate temperature and hydrogen pressure which are suitably determined by the type and amount of the catalyst used and the solution concentration and the molecular weight of the copolymer.

As the solvent used for the hydrogenation reaction, a solvent which does not become a catalytic poison for the hydrogenation catalyst is preferably selected, as exemplified by saturated aliphatic hydrocarbons used as a solvent for a polymerization reaction such as cyclohexane and methylcyclohexane. A polar solvent such as an ether, ester or alcohol exemplified by tetrahydrofuran, dioxane and methyl-t-butyl ether may be added to the above solvent in limits that do not prevent the solubility of the polymer to increase activity of reaction or to suppress a reduction in molecular weight caused by the scission of the molecular chain.

The hydrogenation reaction is preferably carried out when the concentration of the styrene polymer before hydrogenation used for the reaction is 3 to 50 wt%. When the concentration of the polymer is lower than 3 wt%, it is not preferred from the viewpoints of productivity and economy and when the concentration is higher than 50 wt%, the viscosity of the solution becomes too high, which is not preferred from the viewpoints of handling ease and reactivity.

After the end of the hydrogenation reaction, the catalyst can be removed by a known post-treatment such as centrifugation or filtration. In the present invention used optical application, the content of the residual catalytic metal component in the resin must be made as small as possible and is preferably 10 ppm or less, more preferably 1 ppm or less. A hydrogenated polymer of interest can be obtained from the solution of the polymer from which the hydrogenation catalyst has been removed by the distillation off, stripping or re-precipitation of the solvent.

The substrate for optical recording media of the present invention is produced by injection compression molding the above hydrogenated styrene polymer.

Before molding, a stabilizer typified by a hindered phenol-based compound such as Irganox 1010 or 1076 (of Ciba Geigy Limited.), acrylate-based compound containing some hindered phenol groups such as Sumirizer-GS and GM (of Sumitomo Chemical Co., Ltd.), benzofuranone-based stabilizer such as HP136 (of Ciba Geigy Limited.) or phosphite-based compound such as Irgafos 168 (of Ciba Geigy Limited.) is preferably contained to improve the thermal stability of the hydrogenated styrene polymer at the time of melt molding. Additives including a release agent such as a long-chain aliphatic alcohol or long-chain aliphatic ester, lubricant, plasticizer, ultraviolet light absorber and antistatic agent may be contained in limits that do not impair the transparency of the substrate.

The substrate of the present invention can be produced by using optical disk molding equipment such as a conventionally known injection compression molding machine. In the injection compression molding method of the substrate, molding conditions greatly depend upon the thickness of a substrate and the format and recording density of a medium and must be optimized according to the material used. When a substrate having a thickness of about 0.6 mm and a large recording capacity is to be molded, the melting temperature of the hydrogenated styrene polymer at the time of molding is preferably set to a temperature of (glass transition temperature of the hydrogenated styrene polymer + 150)°C to (glass transition temperature of the hydrogenated styrene polymer + 210)°C although it greatly differs according to the polymerization degree of the resin material used. When hydrogenated polystyrene is used, the melting temperature is preferably set to 320 to 360°C. When the melting temperature is lower than (glass transition temperature of the hydrogenated styrene polymer + 150)°C, the melting viscosity of the resin becomes too high, thereby making it impossible to achieve excellent replication. When molding is carried out at a resin temperature higher than (glass transition temperature of the hydrogenated styrene polymer + 210)°C, the obtained substrate may lack in toughness due to marked heat deterioration at the time of melting and may break when it is taken out from the mold and transported. Since heat deterioration is large at the time of melting when a hindered phenol stabilizer is used, a resin containing an acrylate-based compound having some hindered phenol groups or benzofuranone-based stabilizer as a thermal stabilizer is preferably used. The melting temperature at the time of molding is more preferably (glass transition temperature of hydrogenated styrene polymer + 160)°C to (glass transition temperature of the hydrogenated styrene polymer + 200)°C.

The temperature of the mold at the time of molding is preferably in the range of (glass transition temperature of polymer used - 70)°C to (glass transition temperature of polymer used - 10)°C. When the temperature of the mold is lower than (glass transition temperature of polymer used - 70)° C, excellent replication cannot be achieved with a stamper for high-density recording which requires fine pits or narrow grooves. When the temperature of the mold is higher than (glass transition temperature of polymer used - 10)°C, replication itself improves but the substrate deforms when it is taken out from the mold as the glass transition temperature of the polymer is too close to that temperature, with the result that it is inferior in flatness (mechanical properties) disadvantageously. The temperature of the mold is selected to ensure that required replication is satisfied and mechanical properties satisfy medium standards.

The substrate for optical recording media of the present invention thus produced has a light transmission at 400 nm of 88 % or more. The light transmission is preferably higher, more preferably 89 % or more.

The substrate for optical recording media of the present invention has an absolute value of retardation in a single path measured in directions inclined at 0° and 30° from a direction normal to the substrate plane of 30 nm or less. When the absolute value of retardation at 0° and 30° from the direction normal to the substrate plane is larger than 30 nm and a lens having a large numerical aperture is used, the polarization properties of laser light used to read and write information deteriorate with the result of deterioration in electric properties such as increased noise and jitters disadvantageously. The margin of the incidence angle of laser light in the direction normal to the substrate plane becomes small disadvantageously. The absolute value of retardation is preferably smaller, more preferably 20 nm or less, much more preferably 15 nm or less. The absolute value of birefringence (retardation) in the present invention is a value at a wavelength used by a commercially available measuring instrument which will be described later, that is, a measurement value at 633 nm. A substrate having a small retardation absolute value at 633 nm has a small retardation absolute value at 405 nm and a substrate having a large retardation absolute value at 633 nm has a large retardation absolute value at 405 nm. Even when information is recorded on or reproduced from an optical recording medium with laser light having awavelength of about 405 nm, the present invention is effective. Since the birefringence of the substrate right after molding changes with the passage of time, the retardation value in the present invention is measured after it becomes stable. To stabilize the retardation value promptly, the substrate may be annealed at 80°C for several hours or more, for example.

An example of the substrate for optical recording media of the present invention is a doughnut-shaped substrate having a diameter of 50 to 300 mm, a thickness of 0.3 to 3.0 mm and a center hole with a diameter of about 15 mm. Particularly, when compatibility with commercially available CDs and DVDs is taken into account, a substrate having a diameter of 120 mm and a thickness of 0.6 mm or 1.2 mm is preferably used.

The optical recording medium of the present invention comprises a first dielectric layer, recording layer, second dielectric layer and reflective layer formed on the above substrate in the mentioned order.

The dielectric layer in the present invention is preferably an amorphous transparent dielectric thin film having an appropriate refractive index (1.8 to 2.6). The dielectric layer as a protective layer comprises a crystalline chalcogenated metal such as ZnS, ZnSe, ZnTe, PbS or PbTe and an oxide such as $SiO_2$, $Al_2O_3$, $Ta_2O_5$, $TeO_2$, $GeO_2$, $SnO_2$, $In_2O_3$ or $WO_3$ or a nitride such as $Si_3N_4$. Particularly, a dielectric layer comprising ZnS as the main component and an oxide has excellent transparency and small film stress. Further, the oxide is particularly preferably $SiO_2$ because it has a large effect of making the obtained dielectric layer amorphous and reduces heat conductivity and raw material costs.

The amount of $SiO_2$ to be added to ZnS is preferably 12 to 35 mol%, particularly preferably 22 to 24 mol% because the adhesion of the layer to the substrate becomes high and the layer also functions as a protective film most effectively. When the amount is smaller than 12 mol%, $SiO_2$ has a small effect of making the obtained layer amorphous and increases film stress. When the amount is larger than 35 mol%, the refractive index becomes small, the recording sensitivity lowers, and the repeated overwrite durability deteriorates disadvantageously. When the amount is about 20 mol%, the dielectric layer functions as a protective film most effectively from the viewpoints of optical properties, recording sensitivity and repeated overwrite durability.

The thickness of the first dielectric layer is approximately 50 to 300 nm. To improve adhesion between the dielectric layer and the substrate, the dielectric layer may consist of two or more different dielectric layers.

The thickness of the second dielectric layer is approximately 10 to 100 nm. To improve adhesion between the dielectric layer and the recording layer, the second dielectric layer may consist of two or more different dielectric layers.

An amorphous vertical magnetic recording film having an appropriate Curie temperature and a relative large Kerr rotation angle or a generally known phase changing substance can be used in the recording layer of the optical recording medium of the present invention. That is, a rare earth-transition metal alloy film typified by a TbFeCo film is used as a magneto-optical recording film. To use the optical recording medium at a wavelength of about 405 nm in particular, a laminate film consisting of a GdFeCo film or GdFeCo film and a TbFeCo film is preferred. An artificial grating film made from Pt and Co which is under research and development may also be used. An alloy of Te, Se, Sb, In or Ge, specifically SbTe, GeSbTe, GeSbTeSe, TeGeSnAu, GeTe, InSe, InSb, InSbTe, InSbSe or AgSbTe which changes its state between amorphous and crystalline or between crystalline and different crystalline is used in the recording film of the phase changing optical recording medium. The thickness of the recording layer is approximately 10 to 100 nm.

The optically optimum thickness is selected for each layer according to the wavelength of laser light used for writing and reading. When laser light having a wavelength of 650 nm is used, the first dielectric layer has a thickness of 95 nm, the recording layer has a thickness of 19 nm, the second dielectric layer has a thickness of 15 nm, and the metal film has a thickness of 150 nm.

JP-A 6-314439 and JP-A 11-39714 also have a description of the formation of the dielectric layers and the recording layer. The descriptions are included in the invention of the present application.

The reflective layer used in the optical recording medium of the present invention is generally a metal thin film made from Au, Al, Ti, Ni, Cr, Cu or Ag alone, or an alloy essentially composed thereof. The thickness of the reflective layer is approximately 20 to 300 nm.

Preferably, an ultraviolet curable resin protective layer having a thickness of about 1 to 10 μm is further formed on the reflective layer.

The thus formed disk substrates are suitably bonded together and used as an optical recording medium.

The optical recording medium of the present invention is an optical recording medium which comprises a substrate made from a hydrogenated styrene polymer having small birefringence and water absorption and makes use of a change in the physical properties of a recording layer caused by exposure to light to record and reproduce information, or a high-density optical recording medium which is advantageous in increasing the numerical aperture and reducing the wavelength of an optical head required for future high-density recording.

Examples

The following examples are provided for the purpose of further illustrating the present invention but are in no way to be taken as limiting.

Raw materials used for the production of a substrate in Examples are as follows.

*    cyclohexane, methyl t-butyl ether (solvent), styrene, isoprene:

All of them were purified by distillation and dried completely.

*    n-butyllithium, sec-butyllilthium:

n-hexane solutions having concentrations of 1.57 M and 1.00 M were purchased from Kanto Kagaku Co., Ltd. and used directly.

*    tetramethoxysilane:

This was purchased from Shin-Etsu Chemical Co., Ltd., a cyclohexane solution having a concentration of 3.0 wt% was prepared, and a molecular sieve 4A was placed in the solution to dehydrate it completely.

*    Ni/silica·alumina catalyst (65 wt% of Ni carried), Pd/alumina catalyst (1 wt% of Pd carried):

They were purchased from Aldrich Co., Ltd. and used directly.
The measurement of physical properties was carried out in Examples and Comparative Examples as follows.

*    reduced viscosity ($\eta_{sp}$/C): measured in toluene at a concentration of 0.5 g/dL and 30°C.
*    glass transition temperature (Tg): This was measured using the 2920 DSC of TA Instruments Co., Ltd. at a temperature elevation rate of 20°C/min.
*    amount of isoprene copolymerized, hydrogenation factor of aromatic ring (hydrogenation factor): This was determined by $^1$H-NMR measurement using the JNM-A-400 nuclear magnetic resonance absorption device of JEOL.
*    measurement of viscoelasticity at 150° C or less: The storage elastic modulus (E'), loss elastic modulus (E") and tan$\delta$ were measured using the model RSA II of Rheometric Scientific Co., Ltd. A test sample measuring 5 mm (W) x 50 mm (L) x 2 mm (T) was formed by injection molding at a resin temperature of 300°C and a mold temperature of 70°C and the viscoelasticity thereof was measured at -150°C to a measurable temperature and at an oscillation frequency of 1 Hz by three points bending.
*    measurement of viscoelasticity: A oscillation experiment was carried out at 280° C using the model RDAII of Rheometric Scientific Co., Ltd. and a cone plate fixture, and the storage elastic modulus (G' ($\omega_0$)), loss elastic modulus (G" ($\omega_0$)) and tan$\delta$ were measured at an angular frequency $\omega$ of 0.1 to 100 (rad/s).
The substrates were molded using the following device and mold.
*    disk molding: A 0.6 mm-thick disk substrate was formed by injection compression molding using an injection molding machine (MO40D3H of Nissei Plastic Industrial Co., Ltd.), a mold for DVD having a disk diameter of 120 mm and a stamper having a land groove structure (stamper having a DVD-RAM-based format and a one-side memory capacity of 2.6 GB).
*    transmission at 400 nm: A 0.6 mm-thick disk substrate was used to measure transmission at 400 nm using the U-3200 spectrophotometer of Hitachi, Ltd.
*    retardation: This was measured in a single path at the innermost site (23 mm from the center) and the outermost site (58 mm from the center) of the recording area at 0° and 30° from the direction normal to the substrate plane using the ADR200B automatic birefringence measuring instrument of Oak Seisakusho Co., Ltd.
*    initialization: Initial crystallization was carried out using the LK101A bulk eraser of Shibasoku Co., Ltd.
*    retention of land height: The height of a land was measured using an atomic force microscope (AFM) (D3100 of Digital Instrument Co., Ltd.) before and after the substrate was treated at 80°C for 8 hours to calculate the retention of land height from the following equation.

retention (%) = (land height after treatment)/(land height

before treatment) x 100

Example 1

500 g of a polystyrene homopolymer (Type158K of BASF Co., Ltd., weight average molecular weight: 280,000) was dissolved in a mixed solvent of 2,400 g of cyclohexane and 1,600 g of methyl t-butyl ether in a 10-liter stainless steel autoclave, and 140 g of a Ni/silica·alumina catalyst (65 wt% of Ni carried) was charged into the autoclave to carry out a hydrogenation reaction at a hydrogen pressure of 100 kg/cm$^2$ and a temperature of 180° C for 6 hours. After the temperature was returned to room temperature and the inside of the autoclave was fully substituted with nitrogen, the solution was taken out from the autoclave and filtered under pressure using a membrane filter having a pore diameter of 0.1 μm (Fluoropore of Sumitomo Electric Industries, Ltd.) to obtain an achromatic transparent solution (solution A).
Irganox 1010 (of Ciba Geigy Limited.) was added to this solution as a stabilizer in an amount of 0.5 wt% based on the polymer, and the solvent was distilled off by vacuum concentration and flushing to obtain a solid achromatic and transparent hydrogenated styrene polymer. The reduced viscosity $\eta_{sp}$/C of the polymer was 0.50 dL/g. When the hydrogenation factor of the polymer was measured by $^1$H-NMR, it was 99 % or more. The glass transition temperature of the polymer measured by DSC was 150° C. As a result of the measurement of viscoelasticity at 150°C or less, the temperature at which tanδ exceeded 0.04 at a range of 80 to 150°C was 103°C. Although a oscillation experiment was carried out at 280°C for the measurement of viscoelasticity, the maximum value of tanδ was not observed at an angular frequency of 0.1 to 100 (rad/s).
A DVD disk substrate was molded from the obtained resin at a cylinder temperature of 330° C, a movable side temperature of an injection mold of 140°C and a fixed side temperature of 135° C to produce a disk substrate made from the hydrogenated polystyrene polymer. The transmission at 400 nm, absolute value of retardation and land height retention when heated at 80°C of the disk substrate are shown in Table 1.
Inorganic thin films were formed on the obtained substrate by magnetron sputtering. The sputtering device used was the in-line sputtering device (ILC3102) of ANELVA Corp., eight substrates were set on a revolving tray, and films could be formed on each substrate while it was turning on its axis. That is, eight media having the same films formed on the eight substrates could be fabricated at the same time, thereby making it possible to compare these substrates accurately. A 95 nm-thick ZnS-SiO$_2$ film as the first dielectric layer, 19 nm-thick phase changing GeSbTe film as the recording layer, 15 nm-thick ZnS-SiO$_2$ film as the second dielectric layer and 150 nm-thick AlCr alloy film as the reflective film were formed on the substrate in the mentioned order. Further, an ultraviolet curable resin layer was formed, two substrates were bonded together, and the resulting medium was initialized. The thus formed phase changing optical recording medium was used for the evaluation of recording and reproduction characteristics, especially jitters. The DDU-1000 evaluating machine of Pulstec Kogyo Co., Ltd. was used for evaluation. The evaluation conditions were based on standards for DVD-RAMs having a memory capacity of 2.6 GB/side. That is, the optical head used had a laser wavelength of 650 nm and an numerical aperture (NA) of 0.60 and could change the incidence angle on the disk plane of laser light. The inclination angle of the optical axis of laser light with respect to a normal to the disk plane is called "tilt angle". It is possible to tilt the optical axis toward a circumferential direction or radial direction. Since the warp of a disk in the radial direction causes a problem (it is difficult to produce a disk having small warp in the radial direction), the electric properties of the disk were evaluated by changing the tilt angle in the radial direction in the present application. The evaluation was made at a fixed line speed of 6.0 m/sec and a radius of 25 mm. Random data were recorded at each tilt angle and a peak power of 12 mW and reproduced at a reproduction power of 1.0 mW to evaluate groove jitters. The range of tilt angle at which the jitter value becomes 8.5 % or less is called "tilt margin". A large tilt margin means that the disk has adaptability to a drive with wide fluctuations in performance, which is the most desirable properties for an optical recording medium. The results are shown in Table 1.

Example 2

The inside of a 5-liter stainless steel autoclave was fully dried and substituted with nitrogen, and 1,650 g of cyclohexane and 270 g of styrene were charged into the autoclave. Subsequently, a 1.57 M cyclohexane solution containing 4.8 mmol of sec-butyllithium was added to the autoclave to start polymerization. After styrene was completely reacted by stirring at 45°C for 2 hours, 30.0 g of isoprene was added to further carry out the reaction at 50°C for 2 hours. A coupling reaction was then carried out by adding a 3.0 wt% cyclohexane solution containing 1.19 mol of tetramethoxysilane and increasing the temperature to 55°C. Two hours after the start of the coupling reaction, 0.34 g of 2-propanol was added.
This copolymer solution was transferred to a 10-liter stainless steel autoclave, and 1,470 g of cyclohexane, 535 g of methyl t-butyl ether and 50 g of a Ni/silica·alumina catalyst (65 wt% of Ni carried) were added to the autoclave to carry out a hydrogenation reaction at a hydrogen pressure of 100 kg/cm$^2$ and a temperature of 180°C for 4 hours.

After the temperature was returned to normal temperature and the inside of the autoclave was fully substituted with nitrogen, the solution was taken out from the autoclave and filtered under pressure using a membrane filter having a pore diameter of 0.1 μm (Fluoropore of Sumitomo Electric Industries, Ltd.) to obtain an achromatic transparent solution (solution B).

682 g of the hydrogenated polystyrene polymer solution (solution A) obtained in Example 1 was mixed with 1,000 g of the thus obtained solution B in a polymer weight ratio of 50/50, Irganox 1010 (of Ciba Geigy Limited.) was added to the resulting solution as a stabilizer in an amount of 0.5 wt% based on the total of the polymers, and the solvent was distilled off by vacuum concentration and flushing to obtain a solid achromatic and transparent hydrogenated styrene-isoprene copolymer·hydrogenated styrene polymer mixed resin. The reduced viscosity $\eta_{sp}/c$ measured at 30°C in a toluene solution having a concentration of 0.5 g/dL of the polymer was 0.47 dL/g. The glass transition temperature measured by DSC of the polymer was 149°C. The hydrogenation factor measured by $^1$H-NMR of the polymer was 99 % or more. When the temperature at which tanδ exceeded 0.04 at a range of 80 to 150°C was measured by the measurement of viscoelasticity, it was 94°C. When a oscillation experiment was conducted at 280°C, tanδ had the maximum value at ω = 0.4 (rad/s) within the angular frequency (ω) range of 0.1 to 100 (rad/s) and G' at this point was 84 (Pa).

A DVD disk substrate was molded from the obtained resin at a cylinder temperature of 320°C and a movable side temperature of an injection mold of 120°C and a fixed side temperature of 125° C. The transmission at 400 nm, retardation absolute value and land height retention when heated at 80°C of the disk substrate are shown in Table 1.

Further, a phase changing optical recording medium consisting of a first dielectric layer, recording layer, second dielectric layer, reflective layer and ultraviolet curable resin protective layer was produced in the same manner as in Example 1. As described above, film formation by sputtering was carried out by setting substrates on one tray as in Example 1. Further, the tilt margin of jitters was obtained in the same manner as in Example 1. The results are shown in Table 1.

Example 3

The inside of a 5-liter stainless steel autoclave was fully dried and substituted with nitrogen, and 1,282 g of cyclohexane and 271 g of styrene were charged into the autoclave. Subsequently, a 1.57 M cyclohexane solution containing 4.6 mmol of sec-butyllithium was added to the autoclave to start polymerization. After styrene was completely reacted by stirring at 50°C for 2 hours, 30.0 g of isoprene was added to further carry out the reaction at 50°C for 2 hours. A coupling reaction was then carried out at 50° C by adding a 3.0 wt% cyclohexane solution containing 1.3 mmol of tetramethoxysilane. Two hours after the start of the coupling reaction, 0.25 g of 2-propanol was added.

This copolymer solution was transferred to a 10-liter stainless steel autoclave, and 2,000 g of cyclohexane, 530 g of methyl t-butyl ether and 50 g of a Ni/silica·alumina catalyst (65 wt% of Ni carried) were added to carry out a hydrogenation reaction at a hydrogen pressure of 100 kg/cm$^2$ and a temperature of 160° C for 8 hours . After the temperature was returned to room temperature and the inside of the autoclave was fully substituted with nitrogen, the solution was taken out from the autoclave and filtered under pressure using a membrane filter having a pore diameter of 0.1 μm (Fluoropore of Sumitomo Electric Industries, Ltd.) to obtain an achromatic transparent solution.

Irganox 1010 (of Ciba Geigy Limited.) was added as a stabilizer to the obtained solution in an amount of 0.5 wt% based on the polymer, and the solvent was distilled off by vacuum concentration and flushing to obtain a solid achromatic and transparent star-like branched hydrogenated styrene-isoprene copolymer resin. The reduced viscosity $\eta_{sp}/c$ measured at 30°C in a toluene solution having a concentration of 0.5 g/dL of the polymer was 0.41 dL/g. The glass transition temperature measured by DSC of the polymer was 147°C. The hydrogenation factor measured by $^1$H-NMR of the polymer was 99 % or more. When the temperature at which tanδ exceeded 0.04 at a range of 80 to 150°C was measured by the measurement of viscoelasticity, it was 77°C. When a oscillation experiment was conducted at 280°C, tanδ had the maximum value at ω = 63 (rad/s) within the angular frequency (ω) range of 0.1 to 100 (rad/s) and G' at this point was 4,200 (Pa).

A DVD disk substrate was molded from the obtained resin at a cylinder temperature of 340°C and a movable side temperature of an injection mold of 110°C and a fixed side temperature of 105° C. The transmission at 400 nm, retardation absolute value and land height retention when heated at 80° C of the DVD disk substrate are shown in Table 1.

Further, a phase changing optical recording medium consisting of a first dielectric layer, recording layer, second dielectric layer, reflective layer and ultraviolet curable resin protective layer was produced in the same manner as in Example 1. As described above, film formation by sputtering was carried out by setting substrates on one tray as in Example 1. Further, the tilt margin of jitters was obtained in the same manner as in Example 1. The results are shown in Table 1.

Example 4

The inside of a 10-liter stainless steel autoclave was fully dried and substituted with nitrogen, and 4,503 g of cyclohexane and 507 g of styrene were charged into the autoclave. Subsequently, a 1.57 M cyclohexane solution containing 11 mmol of n-butyllithium was added to the autoclave to start polymerization. After styrene was completely reacted by stirring at 45°C for 2 hours, 174 g of isoprene was added to further carry out the reaction at 50°C for 2 hours. Thereafter, 427 g of styrene was added, the temperature was raised to 52°C to further continue the reaction, and then 0.74 g of 2-propanol was added after 2 hours.

A hydrogenation reaction was carried out in the presence of a Ni/silica·alumina catalyst (65 wt% of Ni carried) at a hydrogen pressure of 100 kg/cm$^2$ and a temperature of 180°C for 5 hours in the same manner as in Example 3. After the temperature was returned to room temperature and the inside of the autoclave was fully substituted with nitrogen, the solution was taken out from the autoclave and filtered under pressure using a membrane filter having a pore diameter of 0.1 $\mu$m (Fluoropore of Sumitomo Electric Industries, Ltd.) to obtain an achromatic transparent solution (solution C).

The solution A obtained in Example 1 was added to the obtained solution C and mixed in a polymer weight ratio of 33/67 (polymer content of solution C: 33 wt%), and the solvent was distilled off by vacuum concentration and flushing to obtain a solid achromatic and transparent hydrogenated styrene-isoprene copolymer composition. The reduced viscosity $\eta_{sp}$/c having a concentration of 0.5 g/dL of the polymer was 0.48 dL/g. The hydrogenation factor measured by $^1$H-NMR of the polymer was 99.5 %. The melt viscosity measured at 300°C of the polymer was 1,020 poise at a shear rate of 10$^3$ s$^{-1}$. The glass transition temperature measured by DSC of the polymer was 149°C. When the temperature at which tan$\delta$ exceeded 0.04 at a range of 80 to 150°C was measured by the measurement of viscoelasticity, it was 89°C. When a oscillation experiment was conducted at 280°C, the maximum value of tan$\delta$ was not observed at an angular frequency ($\omega$) of 0.1 to 100 (rad/s).

A DVD disk substrate was molded from the obtained resin at a cylinder temperature of 320°C and a movable side temperature of an injection mold of 127°C and a fixed side temperature of 122° C. The transmission at 400 nm, retardation absolute value and land height retention when heated at 80°C of the disk substrate are shown in Table 1. Further, a phase changing optical recording medium consisting of a first dielectric layer, recording layer, second dielectric layer, reflective layer and ultraviolet curable resin protective layer was produced in the same manner as in Example 1. As described above, film formation by sputtering was carried out by setting substrates on one tray as in Example 1. Further, the tilt margin of jitters was obtained in the same manner as in Example 1. The results are shown in Table 1.

Example 5

(1) The inside of a 5-liter stainless steel autoclave was fully dried and substituted with nitrogen, and 1,733 g of cyclohexane and 145 g of styrene were charged into the autoclave. Subsequently, a 1.57 M cyclohexane solution containing 2.3 mmol of sec-butyllithium was added to the autoclave to start polymerization. After styrene was completely reacted by stirring at 45°C for 2 hours, 15.0 g of isoprene was added to further carry out the reaction at 50°C for 2 hours. Thereafter, 136 g of styrene was added, the temperature was maintained at 50° C to further continue the reaction, and 0.25 g of 2-propanol was added after 2 hours.

(2) The copolymer solution obtained in (1) was transferred to a 10-liter stainless steel autoclave, and 1,417 g of cyclohexane, 530 g of methyl t-butyl ether and 50 g of a Ni/silica·alumina catalyst (65 wt% of Ni carried) were added to the solution to carry out a hydrogenation reaction at a hydrogen pressure of 100 kg/cm$^2$ and a temperature of 190°C for 4 hours. After the temperature was returned to room temperature and the inside of the autoclave was fully substituted with nitrogen, the solution was taken out from the autoclave and filtered under pressure using a membrane filter having a pore diameter of 0.1 $\mu$m (Fluoropore of Sumitomo Electric Industries, Ltd.) to obtain an achromatic transparent solution.

(3) The solvent was distilled off by vacuum concentration and flushing to obtain a solid achromatic and transparent hydrogenated styrene-isoprene copolymer. The reduced viscosity $\eta_{sp}$/c measured at 30°C in a toluene solution having a concentration of 0.5 g/dL of the polymer was 0.44 dL/g. The hydrogenation factor measured by $^1$H-NMR of the polymer was 99.5 % or more. The glass transition temperature measured by DSC of the polymer was 146° C. When the temperature at which tan$\delta$ exceeded 0.04 at a range of 80 to 150° C was measured by the measurement of viscoelasticity, it was 80°C. When a oscillation experiment was conducted at 280°C, tan$\delta$ had the maximum value at $\omega$ = 1 (rad/s) within the angular frequency ($\omega$) of 0.1 to 100 (rad/s) and G' at this point was 14 (Pa).

A DVD disk substrate was molded from the obtained resin at a cylinder temperature of 320°C and a movable side temperature of an injection mold of 118° C and a fixed side temperature of 113° C. The transmission at 400 nm, retardation absolute value and land height retention when heated at 80°C of the disk substrate are shown in Table 1.

Further, a phase changing optical recording medium consisting of a first dielectric layer, recording layer, second dielectric layer, reflective layer and ultraviolet curable resin protective layer was produced in the same manner as in Example 1. As described above, film formation by sputtering was carried out by setting substrates on one tray as in Example 1. Further, the tilt margin of jitters was obtained in the same manner as in Example 1. The results are shown in Table 1.

Example 6

A styrene-isoprene-styrene copolymer having a weight average molecular weight of 125,000 g/mol and an isoprene content of 10 wt% was produced by anion polymerization in the same manner as in Example 4. A hydrogenation reaction was made on the obtained copolymer solution in the presence of a Ni/silica·alumina catalyst (65 wt% of Ni carried) in the same manner as in Example 4, Sumillzer GS (Sumitomo Chemical Co., Ltd.) was added in an amount of 0.5 wt% based on the polymer, and the solvent was distilled off by vacuum concentration and flushing to obtain a solid achromatic and transparent hydrogenated styrene-isoprene-styrene copolymer. The obtained polymer hydrogenated product solution and the hydrogenated product solution (solution A) obtained in Example 1 were mixed together in a hydrogenated product mixing ratio of 1:1, Sumilizer GS (Sumitomo Chemical Co., Ltd.) was added in an amount of 0.5 wt% based on the polymer, and the solvent was distilled off by vacuum concentration and flushing to obtain a solid achromatic and transparent hydrogenated styrene-isoprene-styrene copolymer composition. This composition had a reduced viscosity $\eta_{sp}$/C measured at 30°C in a toluene solution having a concentration of 0.5 g/dL of 0.48 dL/g. The hydrogenation factor measured by $^1$H-NMR of the composition was 99 % or more. The glass transition temperature measured by DSC of the composition was 146°C. When the temperature at which tanδ exceeded 0.04 at a range of 80 to 150°C was measured by the measurement of viscoelasticity, it was 84°C. When a oscillation experiment was conducted at 280°C, the maximum value of tanδ was not observed at an angular frequency (ω) of 0.1 to 100 (rad/s).

A DVD-RAM disk substrate was molded from the obtained resin at a cylinder temperature of 340°C and a movable side temperature of an injection mold of 125°C and a fixed side temperature of 120° C. The transmission at 400 nm, retardation absolute value and land height retention when heated at 80°C of the disk substrate are shown in Table 1.

Further, a phase changing optical recording medium consisting of a first dielectric layer, recording layer, second dielectric layer, reflective layer and ultraviolet curable resin protective layer was produced in the same manner as in Example 1. As described above, film formation by sputtering was carried out by setting substrates on one tray as in Example 1. Further, the tilt margin of jitters was obtained in the same manner as in Example 1. The results are shown in Table 1.

Comparative Example

A DVD disk substrate was molded from a polycarbonate resin (AD5503 of Teijin Chemicals, Ltd.) at a cylinder temperature of 360°C and a movable side temperature of an injection mold of 123° C and a fixed side temperature of 128° C. The retardation absolute value of the disk substrate is shown in Table 1. A phase changing optical recording medium consisting of a first dielectric layer, recording layer, second dielectric layer, reflective layer and ultraviolet curable resin protective layer was produced in the same manner as in Example 1. The tilt margin of jitters was obtained in the same manner as in Example 1. The results are shown in Table 1.

Table 1

| | Ex.1 | Ex.2 | Ex.3 | Ex.4 | Ex.5 | Ex.6 | C.Ex. |
|---|---|---|---|---|---|---|---|
| transmission at 400 nm (%) | 89 | 88 | 89 | 88 | 88 | 88 | 87 |
| retardation (nm, wavelength of 633 nm) | | | | | | | |
|    23 mm, vertical | 12.7 | 8.6 | 1.5 | 11.1 | 7.8 | 7.3 | 30.1 |
|    23 mm, 30° | 16.0 | 12.5 | 3.2 | 11.1 | 8.2 | 8.7 | 75.8 |
|    58 mm, vertical | 2.9 | 2.3 | 0.3 | 4.4 | 2.9 | 1.3 | 18.9 |
|    58 mm, 30° | 6.0 | 4.7 | 1.1 | 7.9 | 5.9 | 6.3 | 29.8 |
| land height retention (%) | 100 | 98 | 95 | 99 | 97 | 98 | 100 |
| tilt margin (°) | | | | | | | |
|    land | 1.2 | 1.0 | 1.3 | 1.0 | 1.1 | 1.3 | 0.7 |
|    groove | 1.4 | 1.2 | 1.4 | 1.1 | 1.3 | 1.4 | 1.0 |

Ex.: Example    C.Ex.: Comparative Example

**Claims**

1.  An optical recording medium for recording and reproducing information by making use of a change in the physical properties of a recording layer caused by exposure to light, comprising a substrate which comprises (1) a hydrogenated styrene polymer having a nuclear hydrogenated styrene polymer unit content of 80 wt% or more and which has (2) a glass transition temperature of 110°C or more, (3) a light transmission at 400 nm of 88 % or more, and (4) a retardation absolute value at 0° and 30° from a direction normal to the substrate plane of 30 nm or less.

2.  The optical recording medium of claim 1, wherein the hydrogenated styrene polymer has a nuclear hydrogenated styrene polymer unit content of 80 to 99 wt% and a temperature at which $\tan\delta$ exceeds 0.04 in the measurement of viscoelasticity at 1 Hz in the range of 80 to 150°C.

3.  The optical recording medium of claim 1, wherein the hydrogenated styrene polymer has a nuclear hydrogenated styrene polymer unit content of 80 to 99.99 wt%, the maximum value of $\tan\delta$ with respect to angular frequency $\omega$ (rad/s) in the measurement of viscoelasticity at 280°C and an elasticity term $G'(\omega_0)$ of $10^3$ Pa or less at an angular frequency $\omega_0$ (rad/s) at which $\tan\delta$ becomes maximum.

4.  The optical recording medium of claim 1, wherein the hydrogenated styrene polymer contains a hydrogenated conjugated diene polymer unit in an amount of 20 wt% or less.

5.  The optical recording medium of claim 1, wherein a first dielectric layer, recording layer, second dielectric layer and reflective layer are formed on the substrate in the mentioned order.

6.  A substrate for optical recording media, which comprises (1) a hydrogenated styrene polymer having a nuclear hydrogenated styrene polymer unit content of 80 wt% or more and which has (2) a glass transition temperature of 110°C or more, (3) a light transmission at 400 nm of 88 % or more, and (4) a retardation absolute value at 0° and 30° from a direction normal to the substrate plane of 30 nm or less.

7.  The substrate of claim 6, wherein the hydrogenated styrene polymer has a nuclear hydrogenated styrene polymer unit content of 80 to 99 wt% and a temperature at which $\tan\delta$ exceeds 0.04 in the measurement of viscoelasticity at 1 Hz in the range of 80 to 150°C

8.  The substrate of claim 6, wherein the hydrogenated styrene polymer has a nuclear hydrogenated styrene polymer unit content of 80 to 99.99 wt%, the maximum value of $\tan\delta$ with respect to angular frequency $\omega$ (rad/s) in the measurement of viscoelasticity at 280°C and an elasticity term $G'(\omega_0)$ of $10^3$ Pa or less at an angular frequency $\omega_0$ (rad/s) at which $\tan\delta$ becomes maximum.

9.  The substrate of claim 1, wherein the hydrogenated styrene polymer contains a hydrogenated conjugated diene polymer unit in an amount of 20 wt% or less.

## INTERNATIONAL SEARCH REPORT

| International application No. |
|---|
| PCT/JP01/03523 |

A. CLASSIFICATION OF SUBJECT MATTER
    Int.Cl⁷   G11B7/24, C08F8/04

According to International Patent Classification (IPC) or to both national classification and IPC

B.   FIELDS SEARCHED

Minimum documentation searched (classification system followed by classification symbols)
    Int.Cl⁷   G11B7/24, 11/105, C08F8/04

Documentation searched other than minimum documentation to the extent that such documents are included in the fields searched
    Jitsuyo Shinan Koho          1922-1996      Toroku Jitsuyo Shinan Koho    1994-2001
    Kokai Jitsuyo Shinan Koho    1971-2001      Jitsuyo Shinan Toroku Koho    1996-2001

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| Y | JP, 10-116442, A (Mitsubishi Chemical Corporation), 06 May, 1998 (06.05.98), | 1,4,5,6,9 |
| A | Claims; Par. Nos. [0016] to [0017], [0025] (Family: none) | 2,3,7,8 |
| Y | JP, 3-142730, A (Mitsubishi Gas Chemical Company, Inc.), 18 June, 1991(18.06.91), Claims    (Family: none) | 1,4,5,6,9 |
| Y | JP, 11-189614, A (Asahi Chemical Industry Co., Ltd.), 13 July, 1999 (13.07.99), Claims; Par. No. [0038]    (Family: none) | 1,4,5,6,9 |
| P,A | WO, 01/23437, A1 (Teijin Limited), 05 April, 2001 (05.04.01) | 1-9 |

☐ Further documents are listed in the continuation of Box C.       ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 July, 2001 (02.07.01) | 10 July, 2001 (10.07.01) |

| Name and mailing address of the ISA/ | Authorized officer |
|---|---|
| Japanese Patent Office | |
| Facsimile No. | Telephone No. |

Form PCT/ISA/210 (second sheet) (July 1992)